# EUROPÄISCHE PATENTSCHRIFT

(11) **EP 2 536 563 B1**
(45) Veröffentlichungstag und Bekanntmachung des Hinweises auf die Patenterteilung: **30.05.2018**
(21) Anmeldenummer: 10776699.0
(22) Anmeldetag: 12.11.2010
(51) Int. Cl.: B32B 27/12, B32B 27/40, B64C 1/18, C09K 21/02, C09K 21/10

(54) **MEHRSCHICHTIGE FLAMMENHEMMENDE FOLIE**
MULTI-LAYER FLAME-RETARDANT FILM
FILM MULTICOUCHE IGNIFUGE

(30) Priorität: 16.02.2010 DE 102010000425
(43) Veröffentlichungstag der Anmeldung: 26.12.2012
(73) Patentinhaber: Benecke-Kaliko AG, 30419 Hannover (DE)
(72) Erfinder: BÜHRING, Jürgen, 30900 Wedemark (DE); LOHRE, Bettina, 31228 Peine (DE); GERKEN, Andreas, 30161 Hannover (DE)
(74) Vertreter: Kilsch, Armin Ralph
(86) Internationale Anmeldenummer: PCT/EP2010/067366
(87) Internationale Veröffentlichungsnummer: WO 2011/101050

(56) Entgegenhaltungen:
- EP-A2- 1 916 286
- DE-A1- 3 807 874
- DE-T2- 69 522 756
- US-A1- 2004 109 992
- US-A1- 2008 166 559
- US-A1- 2010 227 132

## Beschreibung

Häufig frequentierte und/oder auch Feuchtigkeit ausgesetzte Fußwege, beispielsweise in Flugzeugen, sind in der Regel mit Fussböden auf Kunststoffbasis versehen. Dabei müssen diese Fussböden leicht reinigbar und ausreichend verschleißfest sein, so dass diese zu mindestens mehrere Monate ohne Austausch eingesetzt werden können. Nach dem Auftreten von Gebrauchsspuren oder nach festgelegten Wartungsintervallen müssen solche Fußbodenbeläge einfach entfernbar und Ersatzbeläge einfach wieder verlegbar und verklebbar sein.

Bei einem Einsatz solcher Folien in Räumen mit erhöhten Sicherheitsforderungen in Bezug auf die Brandsicherheit, wie z. B. in Kinosälen oder in Land, Wasser- oder Luftfahrzeugen, ist es unbedingt erforderlich, dass die hierfür eingesetzten Materialien ausreichend flammhemmende Eigenschaften aufweisen.

So darf beispielsweise in einer Prüfung eine Flamme aus einem Kerosinbrenner das Material nur so entzünden, dass innerhalb einer bestimmten Zeit die Flamme nur eine geringe Wegstrecke zurücklegt. So eine Prüfung ist zum Beispiel in der FAR 25.853 beschrieben. Zugleich darf der Rauch, der bei der Verbrennung eines solchen Materials entsteht, nur eine solch geringe Dichte aufweisen, dass ein Passagier im Brandfall noch den Weg erkennen kann.

Zudem ist es erforderlich, dass die entstehenden Rauchgase nur eine geringe Toxizität aufweisen. Diese beiden Anforderungen sind beispielsweise in der ABD 0031 beschrieben. Oft sind darüberhinaus aus Gestaltungsgründen und Designvorgaben Farben und Oberflächenstrukturen vorgegeben, die erfüllt werden müssen.

Bisher eingesetzte Materialien bestehen häufig aus Polyvinylchlorid (PVC). Diese enthalten neben in der Öffentlichkeit kritisch diskutierten Weichmachern in der Regel auch als toxisch oder gesundheitsgefährdend eingestufte Flammschutzmittel wie Antimontrioxid oder halogenierte Flammschutzmittel. Zudem sind solche PVC-Folien oder Fussböden häufig sehr schwer (> 2000 g/m²), was gerade bei Fahrzeugen zu einem höheren Treibstoffverbrauch und geringerer Nutzlast führt.

Bei der Verbrennung von PVC entsteht auch unvermeidlicher weise Salzsäure, welche beim Einatmen stark toxisch wirkt.

Alternative Materialien werden auf Basis von Silikonen angeboten. Diese müssen für ausreichend flammhemmende Eigenschaften und zur Reduzierung der Kosten des vergleichsweise teuren Silikons mit einem hohen Füllstoffgehalt eingesetzt werden, was sich wiederum negativ auf die Abriebeigenschaften im Gebrauch auswirkt und zu einem schnellen Verschleiß insbesondere in stark beanspruchten Bereichen (Nassbereich, Toilette, Küche) führt. Zudem kann eine Struktur auf einem Silikonfussboden nicht über einen thermischen Prägeprozess eingebracht werden, da Silikone als Elastomer nicht thermisch verformbar sind.

Im Stand der Technik sind unterschiedliche Maßnahmen bekannt, mit denen flammenhemmende Eigenschaften von Materialien bereitgestellt werden. So offenbart etwa die US 2008 166559 A1 ein flammenhemmendes Material auf Basis von Melaminharzen, welches auf Textilien oder auf andere Trägermaterialien aufgebracht werden kann.

Die EP 1 916 286 A2 betrifft ein Flammschutzmittel und eine härtbare Formmasse und offenbart ein faserverstärktes hartes Formmaterial / Bauteil für einen durch Aushärtung herstellbaren Formkörper, also etwa eine Kunststoffmasse, die zum Beispiel für die Herstellung von Lichtkuppeln oder Bauteilen in Fahrzeugen Verwendung findet.

Die DE 695 22 756 T2. offenbart in allgemeiner Art die Verwendung von Flammhemmstoffen bzw. Flammschutzmitteln in Folien, trifft jedoch keine spezifische Auswahl.

Die DE3807874A1 offenbart eine harte und starre Faserverbundplatte, die aus einem textilen Flächengebilde gebildet ist, welches mit einem Kunstharz imprägniert oder verfestigt wird und als starres Konstruktionsteil verwendet wird.

Es war daher Aufgabe der Erfindung, eine flammenhemmende Fußbodenbelagsfolie insbesondere für Flugzeuge bereitzustellen, bei der die Brandforderungen gemäß der FAR 25853 und zugleich der ABD 0031 erfüllt sind, bei der möglichst keine halogenhaltigen Verbindungen bei einer Verbrennung entstehen, die in vorgegebenen Farbe einfärbbar und durch thermisches Prägen in seiner Oberfläche strukturierbar ist, ein geringes Flächengewicht aufweist und wenig verschleiß bzw. Abrieb zeigt.

Gelöst wird diese Aufgabe durch die Merkmale des Hauptanspruchs. Weitere vorteilhafte Ausbildungen sind in den Unteransprüchen offenbart.

Dabei weist die flammenhemmende Fußbodenbelagsfolie mindestens eine obere Schicht aus einem thermoplastischen Polyurethan (TPU) auf, welches halogenfreie Flammschutzmittel enthält und mindestens mit einer Schicht aus textilem Gewebe haftend verbunden ist. Außerdem weist das textile Gewebe Glasfasern oder Glasfäden auf und das Flammschutzmittel ist auf der Basis von Metallhydroxiden ausgebildet, vorzugsweise auf Basis von Magnesiumhydroxid oder Aluminiumhydroxid, wobei das textile Gewebe Flammschutzmittel enthält und/oder als schwer entflammbares Gewebe ausgebildet ist und das thermoplastische Polyurethan zwischen 20 und 80 Masseprozent halogenfreies Flammschutzmittel enthält, wobei die Folie ein Flächengewicht von weniger als 2000 g/m² besitzt und wobei die Folienstärke der Oberfolie zwischen 0,1 und 4 mm liegt und die Folienstärke der Unterfolie kleiner ist als 4 mm.. Besonders gute Ergebnisse werden erreicht, wenn die Folienstärke der Unterfolie ist vorteilhafterweise als 0,8 mm ist.

Bei einem Brandversuch erfüllt die erfindungsgemäße Folie problemlos die Brandforderungen gemäß der FAR 25853 und zugleich der ABD 0031 und es entstehen keine halogenhaltigen Verbindungen bei der Verbrennung.

Die erfindungsgemäße Folie auf Basis eines thermoplastischen Polyurethans, welches zwischen 20 und 80 Masseprozent halogenfreie Flammschutzmittel enthält, wird mit einem textilen Gewebe verbunden. Das textile Gewebe ist aus Glasfasern bzw. Glasfäden aufgebaut und optimalerweise mit einer Haftschicht beschichtet oder imprägniert, so dass die thermoplastische Polyurethanfolie in beiden Vorzugsrichtungen des Textils eine gute Haftung > 20 N/5cm (gemäß ISO 4578 / 07 1997) aufweist.

Die erfindungsgemäße Folie Materials weist ein Flächengewicht von < 2000 g/m² auf und ist außerdem sehr verschleißfest, d.h. dass der Abrieb in einem Tabertest gemäß DIN 53754 / 06.1977 (H18-Räder, 10 N Gewichtskraft) ist geringer als 1000 mg.

Eine weitere vorteilhafte Ausbildung besteht darin, dass auch die Unterseite des Glasgewebes mit der gleichen flammgeschützen thermoplastischen Polyurethanfolie versehen ist. Die Rückseite des Materials ist damit ausreichend glatt, um eine gute blasenfreie Verklebung z.B. in einem Flugzeug zu gewährleisten, da Blasen insbesondere bei niedrigen Außendrücken in großer Flughöhe zu Aufwerfungen im Fussboden führen können. Außerdem ist eine gute Verlegbarkeit bei ausreichenden mechanischen Eigenschaften gegeben.

Aus ästhetischen Gründen ist zu mindestens die Oberseite, d.h. die obenliegende thermoplastische Polyurethanfolie eingefärbt, wobei die Einfärbung bevorzugter Weise bei der Herstellung der Folie mit einem Farb-Masterbatch auf Basis eines TPUs erfolgt. Die Verwendung beispielsweise von Masterbatchen auf Basis alternativer Thermoplasten ist zwar technisch möglich, kann jedoch zur Nichterfüllung der Brandschutzanforderungen nach der FAR 25.853 führen.

Der Einsatz von Geweben ist gegenüber dem Einsatz anderer Textilarten wie beispielsweise Gewirken, Gestricken, Gelegen oder Vliesen bevorzugt, da Gewebe bei der Handhabung der erfindungsgemäßen Konstruktion eine Dimensionsstabilität insbesondere beim Verlegen als Flugzeugboden optimal gewährleisten und auch vorteilhaft für die Durchstossfestigkeit der Konstruktion sind.

Als textiles Gewebe werden entweder mit Flammschutzmittel ausgerüstete Gewebe oder Gewebe eingesetzt, die üblicherweise schon schwerer entflammbar sind als beispielsweise Gewebe auf Basis von nicht mit Flammschutzmitteln ausgerüsteten Polyethylenterephthalat. Das können Gewebe sein, deren textile Fäden schon flammschützende Einheiten in den Polymerketten enthalten oder beispielsweise auch Gewebe auf Basis flammhemmender aromatischer Polyamide (z.B. Kevlar®, Nomex®) oder anderer flammhemmender Polymere (beispielsweise Lenzing FR®, Basofil®, Twaron®, Kermel®, BelcoTex®, Pyron®, Trevira CS®, Polysulfonamid (Tanlon®), Polyphenylensulfid) oder auf Basis von Metallfäden oder Polymerfäden die metallische Anteile enthalten. Besonders bevorzugt sind aber Glasgewebe oder Gewebe auf Basis von Mineralien wie Basaltfasergewebe , die eine sehr gute flammhemmende Wirkung aufweisen.

Alle Gewebe können für eine verbesserte Verbundhaftung ein- oder beidseitig bzw. über eine Imprägnierung mit einer die Haftung verbessernden Polymerschicht, insbesondere auf Basis von Polyurethanen oder Isocyanaten ausgerüstet werden.

Die Herstellung der für die erfindungsgemäße Konstruktion notwendigen thermoplastischen Polyurethanfolie erfolgt über übliche Folienherstellungsverfahren wie

Kalandrieren, Gießfolienextrusion, Blasfolienextrusion oder Extrusion aus einer Breitschlitzdüse, wobei letzteres Verfahren neben dem Kalandrieren bevorzugt ist.

Die Oberfolie ist auf der außen liegenden Fläche vorzugsweise mit mindestens einer Lackschicht versehen, wodurch die Gebrauchseigenschaften wie beispielsweise die Abriebbeständigkeit, der Glanzgrad oder der Reibungskoeffizient eingestellt werden können.

Zur Verbesserung der Gebrauchstüchtigkeit insbesondere der Abriebbeständigkeit kann die Oberfläche mit einer vernetzten oder vernetzenden Lackschicht versehen werden. Bevorzugter weise eignen sich hierfür über elektromagnetische Strahlung vernetzende Systeme (UV-Licht-Vernetzung, Elektronenstrahlvernetzung) oder thermisch bzw. über chemische Reaktionen vernetzende Systeme wie Isocyanat- oder Carbödiimid-vernetzende Polyurethansysteme.

Auch Lack- oder Beschichtungssysteme, die vergleichsweise harte Segmente in den Polymerketten enthalten wie acrylathaltige Lacksysteme sind zur Verbesserung beispielsweise der Abriebbeständigkeit geeignet.

Für eine verbesserte Verklebbarkeit der Konstruktion kann auch die Unterseite der Konstruktion, d.h. die Unterfolie bzw. das unten liegende Gewebe mit mindestens einer Lack-, Haft- oder Primerschicht versehen werden.

In der Regel wird die Konstruktion nachfolgend kontinuierlich mittels einer Prägewalze, die das negative Abbild der gewünschten Oberflächenstruktur des Verbundes besitzt, thermisch geprägt. Auch eine diskontinierliche Prägung oder die Darstellung der Struktur schon bei der Foliendarstellung über ein Gießfolienverfahren oder Prägung schon durch eine strukturierte Glättwerkswalze sind möglich.

Als thermoplastisches Polyurethan sind beispielsweise Polyurethane geeignet, die Ether-, Ester- oder Carbonatgruppen bzw. auch Gemische daraus enthalten. Als Isocyanatbasis für die eingesetzten Polyurethane sind beispielsweise Hexamethylendiisocyanat (HDI), Isophorondiisocyanat(IPDI), Dicyclohexylmethan-4,4'-Diisocyanat (HMDI), 2-Methylpentandiisocyanat (MPDI), 2,2,4-Trimethylhexamethylendiisocyanat/2,4,4-Trimethyl-hexamethylendiisocyanat (TMDI), Tetramethylendiisocyanat, Norbornandiisocyanat (NBDI), Methylendiphenyldiisocyanat (MDI), Diisocyanatomethylbenzen, insbesondere das 2,4- und das 2,6-Isomere und technische Gemische beider Isomeren (TDI), Tetramethylxylylendiisocyanat (TMXDI) und Naphthylendiisocyanat (NDI) oder Derivate aus diesen Isocyanaten wie z. B. Isocyanurate, Uretdione, Allophanate und/oder Biurete oder Gemische aus vorstehenden Substanzen geeignet, wobei insbesondere aromatische thermoplastische Polyurethane auf Basis von MDI, TDI, TMXDI oder NDI bevorzugt sind, da TPUs auf dieser Basis eine im Vergleich zu aliphatischen thermoplastischen Polyurethanen hohe Menge an Flammschutzmitteln aufnehmen können und auch kostengünstiger als aliphatische Isocyanate sind.

Dementgegen kann der Einsatz von aliphatischen TPUs insbesondere in der oberen Folie in den Fällen vorteilhaft sein, wenn eine besonders hohe Lichtechtheit der Oberfläche gefordert ist.

Als Flammschutzmittel werden insbesondere nicht halogenhaltige Flammschutzmittel eingesetzt, wobei der Einsatz halogenhaltiger Flammschutzmittel nicht ausgeschlossen ist. So ist auch der Einsatz von Brom- oder Chlor-haltigen organischen Verbindungen möglich aber nicht bevorzugt oder auch Kombinationen dieser Verbindungen mit Antimon-haltigen Verbindungen. Besonders geeignet sind stickstoffhaltige Flammschutzmittel wie Melamin- oder Guanidinderivate oder auch Phosphor-haltige Flammschutzmittel wie Organophosphorverbindungen oder organische Verbindungen, die Stickstoff- und Phosphor enthalten.

Neben dem Einsatz von Flammschutzmitteln auf Basis von Metallhydroxiden wie Magnesiumhydroxid oder Aluminiumhydroxid ist auch der Einsatz von anorganischen Bor-haltigen oder Ammonium-haltigen Verbindungen möglich. Andere mögliche anorganische Verbindungen enthalten beispielsweise Antimon, Molybdän oder elementaren Phosphor. Vorteilhaft kann auch der Einsatz von expandierbaren Graphit oder nanoskaligen Silikatderivaten als Flammschutzmittel sein.

Der Einsatz von Mischungen von Flammschutzmitteln kann insbesondere deutlich vorteilhaftere brandhemmende Eigenschaften erzeugen als es durch eine ausschließlich additive Wirkung von einzelnen Flammschutzmitteln zu erwarten wäre (synergistischer Effekt).

Eine gute Übersicht über mögliche einsetzbare Flammschutzmittel findet sich beispielswiese auch in "Priorisation of Flame Retardants for Environmental Risk Assessment" von P.R. Fisk, A.E. Girling, R.J. Wildey; Environment Agency 2003; Peter Fisk Associates, 9 St Swithin's Road, Whitstable, Kent CT5 2HT.

In allen Schichten des erfindungsgemäßen Verbundgebildes können ggf. Hilfsmittel und Additive wie Gleitmittel, Rheologiehilfsmittel, Stabilisatoren gegen oxidativen, thermischen, hydrolytischen, strahlungsinduzierten oder mikrobiellen Abbau oder Alterung, Trennmittel, Pigmente, Verstärkungsstoffe, Füllstoffe oder Treibmittel eingesetzt werden.

Insbesondere können als Füllstoff auch nichtbrennbare Fasern in das thermoplastische Polyurethan eingebracht werden. Bevorzugterweise werden hier mineralische Fasern, insbesondere Glasfasern eingesetzt. Solche Fasern können beispielsweise zur mechanischen Verstärkung des Verbundes eingesetzt werden, ohne die brandhemmende Wirkung insgesamt negativ zu beeinträchtigen.

Anhand eines Ausführungsbeispieles soll die Erfindung näher erläutert werden.

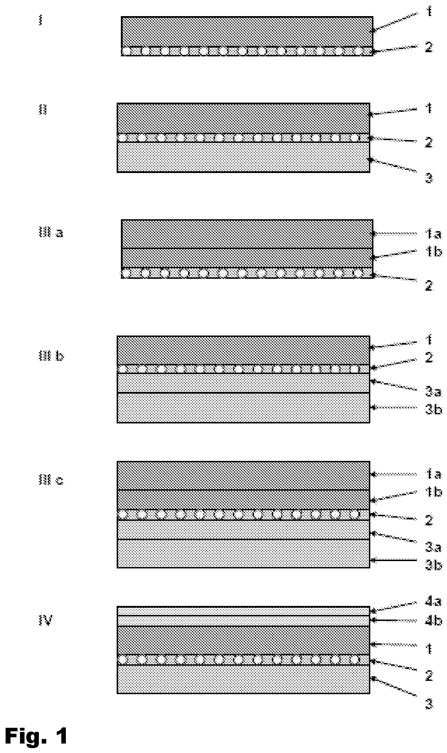

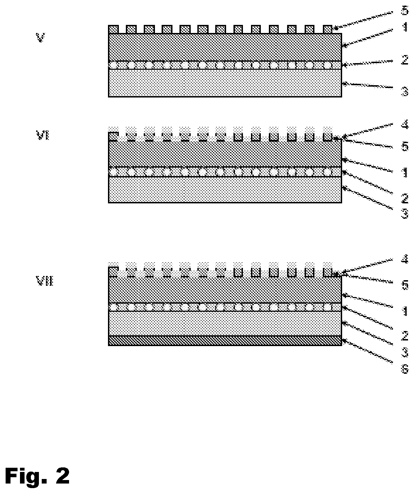

Die Fig. 1 und 2 zeigen hierzu unterschiedliche Ausführungsbeispiele I bis VII der erfindungsgemäßen Folie.

Beispiel I zeigt einen einfachen lediglich zweischichtigen Aufbau der erfindungsgemäßen

Folie, wobei ein mit Flammschutzadditiven ausgerüstetes thermoplastisches Polyurethan 1 mit einer Schicht aus flammhemmenden Textil 2 verbunden ist.

Beispiel II zeigt eine weitere vorteilhafte Ausführung, bei der sich unterhalb des Textils/ der Textilschicht 2 aus der Konstruktion gemäß Beispiel I eine weitere mit Flammschutzmitteln ausgerüstete Schicht 3 aus dem gleichen oder einem anderen thermoplastischen Polyurethan befindet. So eine Konstruktion kann vorteilhaft sein, wenn eine besonders glatte Rückseite gewünscht wird oder wenn die Oberseite des Verbundes mit einer Narbung versehen werden soll. Da eine Oberflächenstrukturierung / Oberflächenformgebung in Form einer Narbung in der Regel über ein Prägewerkzeug (z.B. Walze oder Platte) mit einer negativen Strukturierung in die Oberfolie thermisch eingebracht wird, kann durch eine zusätzliche Unterfolie das Durchdrücken der Struktur bis auf die Rückseite des erfindungsgemäßen Verbundes weitestgehend oder vollständig verhindert werden.

Ausführungsbeispiele IIIa, IIIb, und IIIc zeigen weitere vorteilhafte Ausbildungen der erfindungsgemäßen Folie, bei der Folienschichten lb, 2b, aus dem gleichen oder einem anderen mit Flammschutzmitteln ausgerüsteten thermoplastischen Polyurethan unter- oder oberhalb der Oberfolie und/oder der Unterfolie in der Konstruktion eingebunden sind. Durch eine solche Konstruktion können beispielsweise größere Dicken des erfindungsgemäßen Verbundes hergestellt werden.

Ausführungsbeispiel VII zeigt eine andere vorteilhafte Ausbildung, bei der die Unterseite der erfindungsgemäßen Folie bzw. ihres Verbundes mit einer oder mehreren Lack- und/oder Primerschichten 6 versehen ist, um beispielsweise ein Verkleben des Verbundes auf einer festen Unterlage beispielsweise in einem Flugzeug oder auch auf einer flexiblen Unterlagen zu ermöglichen.

Ausführungsbeispiel IV zeigt eine andere vorteilhafte Ausbildung, bei der die Oberfläche der oberen Folie mit einer oder mehreren Lackschichten 4a, 4b versehen ist. Dies ist vorteilhaft, um beispielsweise die Abriebeigenschaften, die Kratzfestigkeiten, das Reinigungsverhalten, die Beständigkeit gegen Wasch- und Lösungsmitteln, den Glanzgrad, die Farbe oder die Alterungseigenschaften oder Kombinationen aus diesen Eigenschaften zu verbessern.

Ausführungsbeispiele V und VI zeigen weitere vorteilhafte Ausbildungen, bei denen aus ästhetischen Gründen oder um die Griffigkeit des Verbundes insbesondere bei Verwendung als Fussbodenbelag zu verbessern, die erfindungsgemäße Konstruktion auf der Oberfläche mit einer Struktur oder Narbung 5 versehen ist

Vorteilhafterweise kann die Oberfläche auch mit einem Druck versehen werden, um aus ästhetischen Gründen Bilder oder Muster auf den Verbund aufzubringen. Zusätzlich kann die Oberfläche mit einer Struktur und/oder transparenten Lackschichten versehen werden.

Der erfindungsgemäße Aufbau kann auch in einem kontinuierlichen oder diskontinuierlichem Verfahren auf eine Trägerschicht aufgebracht werden. So eine Trägerschicht kann beispielsweise zur weiteren mechanischen Stabilisierung und/oder zur Verbesserung der Durchstoßfestigkeit des erfindungsgemäßen Verbundes dienen.

Die erfindungsgemäße Konstruktion lässt sich insbesondere überall dort anwenden, wo hohe Brandschutzforderungen bestehen. So kann man Fussböden nicht nur in Flugzeugen sondern auch in anderen Fahrzeugen wie Busse oder Bahnen, in Flughäfen, öffentlichen Gebäuden, Schwimm- und Sportanlagen, Industrie-, Büro-, und Wohnbereichen oder in Veranstaltungsräumen wie Gaststätten, Seminarräumen, Messehallen, Kinos, Diskotheken oder Stadien mit dieser Konstruktion ausstatten. Denkbar ist auch die Verwendung als Wand- oder Deckenverkleidungselement, oder auf Tischen, Sitz- oder Ablageflächen.

Die erfindungsgemäße Folie erfüllt beispielsweise die Anforderungen von Airbus AIMS04-26-001. Insbesondere die Anforderungen entsprechend der FAR 25.853 nach einer niedrigen Brennrate und der ABD 0031 nach einer geringen Rauchgasdichte und Rauchgastoxizität bei definierten Brandbedingungen werden erfüllt.

Mit einer Konstruktion gemäß Ausführungsbeispiel VI werden folgende technische Werte erreicht, wobei die obere und untere Folie jeweils eine Stärke von 0,4 mm aufweisen und als Textil ein Glasgewebe mit 100 g/m² Flächengewicht verwendet wird:
Brennprüfung nach FAR 25.853
Flammverlöschungszeit längs: 11,7 sec
Flammverlöschungszeit quer: 9,7 sec
Prüfung gemäß ABD 0031: 2003-02
spezifische optische Rauchgasdichte mit Flamme: erfüllt
spezifische optische Rauchgasdichte ohne Flamme: erfüllt
Rauchgastoxizität mit Flamme: erfüllt; keine Detektion von Halogenverbindungen
Rauchgastoxizität ohne Flamme: erfüllt; keine Detektion von Halogenverbindungen.

### Bezugszeichenliste

### (Teil der Beschreibung)

- 1: Schicht aus einem thermoplastischen Polyurethan
- la: weitere Schicht aus einem thermoplastischen Polyurethan
- 1b: weitere Schicht aus einem thermoplastischen Polyurethan
- 2: Textilschicht
- 3: weitere Schicht aus einem thermoplastischen Polyurethan
- 4a: Lackschicht
- 4b: Lackschicht
- 5: Narbung, Prägung, Struktur
- 6: Lack- oder Primerschicht

## Patentansprüche

1. Mehrschichtige flammenhemmende Fußbodenbelagsfolie, insbesondere für Fußböden von Flugzeugen, die mindestens eine obere Schicht aus einem thermoplastischen Polyurethan aufweist, welches halogenfreie Flammschutzmittel enthält, wobei die flammenhemmende Folie mit mindestens einer Schicht aus textilem Gewebe haftend verbunden ist, wobei das textile Gewebe Glasfasern oder Glasfäden aufweist und das Flammschutzmittel auf der Basis von Metallhydroxiden ausgebildet ist, vorzugsweise auf Basis von Magnesiumhydroxid oder Aluminiumhydroxid, wobei das textile Gewebe Flammschutzmittel enthält und/oder als schwer entflammbares Gewebe ausgebildet ist und das thermoplastische Polyurethan zwischen 20 und 80 Masseprozent halogenfreies Flammschutzmittel enthält, wobei die Folie ein Flächengewicht von weniger als 2000 g/m² besitzt und wobei die Folienstärke der Oberfolie zwischen 0,1 und 4 mm liegt und die Folienstärke der Unterfolie kleiner ist als 4 mm.

2. Flammenhemmende Fußbodenbelagsfolie nach Anspruch 1, bei der das textile Gewebe Metallfäden oder Polymerfäden mit metallischen Anteilen enthält.

3. Flammenhemmende Fußbodenbelagsfolie nach Anspruch 1 oder 2, bei der mindestens eine weitere Schicht aus thermoplastischen Polyurethan mit halogenfreie Flammschutzmittel auf der Rückseite der Schicht aus textilem Gewebe angeordnet ist.

4. Flammenhemmende Fußbodenbelagsfolie nach einem der Ansprüche 1 bis 3, bei der die Außen- oder Oberseite der Folie mit einer Lackschicht, insbesondere einer Lackschicht aus vernetztem Polyurethan versehen ist.

5. Flammenhemmende Fußbodenbelagsfolie nach einem der Ansprüche 1 bis 4, bei der das thermoplastische Polyurethan auf Isocyanatbasis hergestellt ist und Ether-, Ester- oder Carbonatgruppen oder deren Gemische enthält.

6. Flammenhemmende Fußbodenbelagsfolie nach einem der Ansprüche 1 bis 5, bei der das thermoplastische Polyurethan ein aromatisches thermoplastisches Polyurethan ist.

7. Flammenhemmende Fußbodenbelagsfolie nach einem der Ansprüche 1 bis 6, bei der das halogenfreie Flammschutzmittel stickstoffhaltig ist.

8. Flammenhemmende Fußbodenbelagsfolie nach einem der Ansprüche 1 bis 7, wobei das halogenfreie Flammschutzmittel stickstoffhaltige Melamin- oder Guanidinderivate aufweist.

9. Flammenhemmende Fußbodenbelagsfolie nach einem der Ansprüche 1 bis 8, bei der das thermoplastische Polyurethan mit Füllstoffen, insbesondere mit mineralischen Fasern versehene ist.

## Claims

1. Multilayer flame-retardant floorcovering sheet, in particular for aircraft floors, which has at least one upper layer made of a thermoplastic polyurethane which comprises halogen-free flame retardants, where the flame-retardant sheet has been adhesive-bonded to at least one layer made of woven textile fabric, where the woven textile fabric comprises glass fibres or glass filaments, and the flame retardant is based on metal hydroxides, preferably based on magnesium hydroxide or aluminium hydroxide, where the woven textile fabric comprises flame retardant and/or is low-flammability woven fabric and the thermoplastic polyurethane comprises from 20 to 80% by mass of halogen-free flame retardant, where the weight per unit area of sheet is less than 2000 g/m², and where the thickness of the upper sheet is from 0.1 to 4 mm and the thickness of the undersheet is less than 4 mm.

2. Flame-retardant floorcovering sheet according to Claim 1, in which the woven textile fabric comprises metal filaments or polymer filaments with metallic content.

3. Flame-retardant floorcovering sheet according to Claim 1 or 2, in which, arranged on the reverse side of the layer made of woven textile fabric, there is at least one further layer made of thermoplastic polyurethane with halogen-free flame retardant.

4. Flame-retardant floorcovering sheet according to any of Claims 1 to 3, in which a lacquer layer, in particular a lacquer layer made of a crosslinked polyurethane, has been provided to the external or upper side of the sheet.

5. Flame-retardant floorcovering sheet according to any of Claims 1 to 4, in which production of the thermoplastic polyurethane was based on isocyanate and the said polyurethane comprises ether groups, ester groups or carbonate groups or a mixture of these.

6. Flame-retardant floorcovering sheet according to any of Claims 1 to 5, in which the thermoplastic polyurethane is an aromatic thermoplastic polyurethane.

7. Flame-retardant floorcovering sheet according to any of Claims 1 to 6, in which the halogen-free flame retardant is a nitrogen-containing flame retardant.

8. Flame-retardant floorcovering sheet according to any of Claims 1 to 7, where the halogen-free flame retardant comprises nitrogen-containing derivatives of melamine or of guanidine.

9. Flame-retardant floorcovering sheet according to any of Claims 1 to 8, in which fillers, in particular mineral fibres, have been provided to the thermoplastic polyurethane.

## Revendications

1. Film ignifuge multicouche pour le revêtement de planchers, notamment de planchers d'aéronefs, qui comprend au moins une couche supérieure en un polyuréthane thermoplastique, qui contient des agents ignifuges sans halogène, le film ignifuge étant relié par adhésion avec au moins une couche de tissu textile, le tissu textile comprenant des fibres de verre ou des fils de verre, et l'agent ignifuge étant formé à base d'hydroxydes métalliques, de préférence à base d'hydroxyde de magnésium ou d'hydroxyde d'aluminium, le tissu textile contenant des agents ignifuges et/ou étant configuré sous la forme d'un tissu difficilement inflammable, et le polyuréthane thermoplastique contenant entre 20 et 80 pour cent en masse d'agent ignifuge sans halogène, le film présentant un poids superficiel inférieur à 2 000 g/m² et l'épaisseur de film du film supérieur étant comprise entre 0,1 et 4 mm, et l'épaisseur de film du film inférieur étant inférieure à 4 mm.

2. Film ignifuge pour le revêtement de planchers selon la revendication 1, dans lequel le tissu textile contient des fils métalliques ou des fils polymères contenant des fractions métalliques.

3. Film ignifuge pour le revêtement de planchers selon la revendication 1 ou 2, dans lequel au moins une autre couche en polyuréthane thermoplastique contenant des agents ignifuges sans halogène est agencée sur le côté arrière de la couche en tissu textile.

4. Film ignifuge pour le revêtement de planchers selon l'une quelconque des revendications 1 à 3, dans lequel le côté extérieur ou supérieur du film est muni d'une couche de vernis, notamment d'une couche de vernis en polyuréthane réticulé.

5. Film ignifuge pour le revêtement de planchers selon l'une quelconque des revendications 1 à 4, dans lequel le polyuréthane thermoplastique est fabriqué à base d'isocyanate, et contient des groupes éther, ester ou carbonate ou leurs mélanges.

6. Film ignifuge pour le revêtement de planchers selon l'une quelconque des revendications 1 à 5, dans lequel le polyuréthane thermoplastique est un polyuréthane thermoplastique aromatique.

7. Film ignifuge pour le revêtement de planchers selon l'une quelconque des revendications 1 à 6, dans lequel l'agent ignifuge sans halogène contient de l'azote.

8. Film ignifuge pour le revêtement de planchers selon l'une quelconque des revendications 1 à 7, dans lequel l'agent ignifuge sans halogène comprend des dérivés de mélamine ou de guanidine contenant de l'azote.

9. Film ignifuge pour le revêtement de planchers selon l'une quelconque des revendications 1 à 8, dans lequel le polyuréthane thermoplastique est muni de charges, notamment de fibres minérales.
